# FASCICULE DE BREVET EUROPEEN

(11) **EP 0 865 416 B1**
(45) Date de publication et mention de la délivrance du brevet: **15.03.2000**
(21) Numéro de dépôt: 96941078.6
(22) Date de dépôt: 29.11.1996
(51) Int. Cl.: C04B 12/02, C04B 28/34

(54) **NOUVELLE PHASE LIANTE POUR CIMENTS PHOSPHOMAGNESIENS ET LEUR UTILISATON POUR LA PREPARATION DE MORTIERS**
BINDEPHASE FÜR PHOSPHOMAGNESIUMZEMENT UND DEREN VERWENDUNG ZUR MÖRTELHERSTELLUNG
NOVEL BINDING PHASE FOR PHOSPHORUS-MAGNESIUM CEMENTS AND USE THEREOF FOR PREPARING MORTARS

(30) Priorité: 08.12.1995 FR 9514538
(43) Date de publication de la demande: 23.09.1998
(73) Titulaire: RHODIA CHIMIE, 92408 Courbevoie Cédex (FR)
(72) Inventeur: ORANGE, Gilles, F-95230 Soisy sous Montmorency (FR); LE GUILLOU, Bruno, F-93380 Pierrefitte-sur-Seine (FR)
(74) Mandataire: Dubruc, Philippe
(86) Numéro de dépôt international: FR9601894
(87) Numéro de publication internationale: WO9721639

(56) Documents cités:
- EP-A- 0 219 952
- EP-A- 0 661 242
- DE-B- 1 300 858
- US-A- 2 391 493
- US-A- 2 675 322
- US-A- 3 821 006
- CHEMICAL ABSTRACTS, vol. 122, no. 18, 1 Mai 1995 Columbus, Ohio, US; abstract no. 221121, BAB HIDEAKI & AL.: "Method of spreading of cement" XP002011311 & JP 07 024 815 A (NIPPON CHEMICAL IND.) & PATENT ABSTRACTS OF JAPAN vol. 95, no. 001 & JP 07 024815 A (NIPPON CHEMICAL IND), 27 Janvier 1995,

## Description

L'invention a trait à un nouveau ciment phosphomagnésien dont la phase liante comprend un composé du phosphore, un composé du magnésium et un composé minéral, ledit composé étant introduit sous une forme spécifique.

La préparation d'un ciment type phosphomagnésien passe par le mélange de la phase liante avec de l'eau et éventuellement des granulats.

Lors de ce mélange et avant que le ciment ne se soit solidifié, on constate un phénomène de démixion : les constituants solides du ciment, en particulier les granulats, ont tendance à floculer sous l'effet de la gravité au fond du ciment, laissant en suface une couche constituée essentiellement d'eau.

Ce phénomène a des conséquences graves sur les caractéristiques finales du ciment : en effet le matériau est moins dense, moins homogène d'où des propriétés mécaniques affaiblies, un aspect esthétique médiocre, une durabilité diminuée, une porosité plus grande.

Dans le cas où le mortier ou le coulis est déposé sur un support poreux, on observe également un phénomène d'absorption de l'eau par le support. Cette absorption conduit là encore à un matériau présentant de mauvaises propriétés et en particulier une mauvaise adhérence sur le support.

Ce phénomène est d'autant plus marqué que la teneur en eau est importante, ce qui est le cas par exemple des compositions de ciment type coulis.

La présente invention a donc pour objectif de proposer un ciment phosphomagnésien conduisant à des mortiers ou coulis ne présentant pas de phénomène de démixion, ou de phénomène d'absorption de l'eau par un support, tout en conservant les avantages des mortiers et coulis phosphomagnésiens à savoir temps de prise et durcissement rapides.

Un autre but est de proposer des ciments phosphomagnésiens présentant des propriétés mécaniques et un aspect esthétique améliorés.

Dans ces buts, la présente invention a pour objet un ciment phosphomagnésien obtenu par mélange d'eau et d'une phase liante à base d'au moins un composé du phosphore, d'au moins un composé du magnésium et d'au moins un composé minéral caractérisé en ce que le composé minéral est introduit sous forme :
- soit de particules (1) de taille inférieure à 0,1 µm,
- soit d'agrégats (2) de taille inférieure à 0,1 µm,
- soit d'agglomérats (3) susceptibles de se désagglomérer au moins en partie, lors du mélange de ladite phase liante et de l'eau, en particules de taille inférieure à 0,1 µm ou en agrégats de taille inférieure à 0,1 µm.

Un autre objet de l'invention concerne l'utilisation de ce ciment pour la réalisation de mortiers ou de coulis

Enfin, l'invention a également pour objet un matériau composite à base d'un tel ciment et de fibres.

D'autres avantages et caractéristiques de l'invention apparaîtront plus clairement à la lecture de la description et des exemples qui vont suivre.

L'invention concerne tout d'abord un ciment phosphomagnésien obtenu par mélange d'eau et d'une phase liante à base d'au moins un composé du phosphore, d'au moins un composé du magnésium et d'au moins un composé minéral caractérisé en ce que le composé minéral est introduit sous forme :
- soit de particules (1) de taille inférieure à 0,1 µm,
- soit d'agrégats (2) de taille inférieure à 0,1 µm,
- soit d'agglomérats (3) susceptibles de se désagglomérer au moins en partie, lors du mélange de ladite phase liante et de l'eau, en particules de taille inférieure à 0,1 µm ou en agrégats de taille inférieure à 0,1 µm.

Classiquement, les ciments sont constitués d'une phase liante comprenant le cas échéant, les additifs usuels dans le domaine. Bien qu'un terme différent soit utilisé pour définir des ciments comprenant des granulats, outre ladite phase liante et les éventuels additifs, pour plus de commodité, dans la description, le terme unique de "ciment" sera utilisé pour nommer ces deux types de compositions.

Le ciment selon l'invention est un ciment phosphomagnésien. La phase liante d'un tel ciment comprend donc un premier constituant à base de phosphore et un second constituant à base de magnésium.

Pour ce qui est du premier constituant à base de phosphore, tous les composés du phosphore sont utilisables dans la mesure où ils comprennent du pentoxyde de phosphore, disponible directement ou sous la forme d'un précurseur.

Ainsi, à titre de composé à base de phosphore, on peut mentionner sans intention de se limiter, le pentoxyde de phosphore, l'acide phosphorique ou des dérivés comme l'acide orthophosphorique, l'acide pyrophosphorique, l'acide polyphosphorique, ou encore les sels de tels acides, comme les phosphates, les hydrogénophosphates, les orthophosphates, les pyrophosphates, les polyphosphates, les tripolyphosphates, les tétrapolyphosphates, d'aluminium, de calcium, de potassium, de magnésium, d'ammonium, ou leurs mélanges.

Il est à noter que les rejets contenant du phosphore des industries fabriquant des fertilisants, ou encore des aciéries (décapage de l'acier, traitement pour réduire la corrosion) peuvent être employés comme constituants à base de phosphore.

Selon un mode de réalisation particulier de l'invention, on utilise les sels des acides à base de phosphore mentionnés auparavant.

De préférence, on met en oeuvre des phosphates, des hydrogénophosphates de potassium, de magnésium, d'ammonium, ou leurs mélanges. D'une façon encore plus préférée, le constituant à base de phosphore est le dihydrogénophosphate d'ammonium, éventuellement mélangé à du tripolyphosphate d'ammonium.

Le constituant à base de phosphore peut se présenter sous une forme liquide ou de préférence solide.

Selon une première variante, le constituant à base de phosphore se trouve sous la forme de particules dont la granulométrie est plus particulièrement d'au plus 300 µm. Il est à noter que cette valeur n'est pas critique et que, s'il est possible d'utiliser des constituants dont la taille des particules est supérieure à 300 µm, un broyage avant incorporation dans la composition selon l'invention peut être souhaitable.

Selon une seconde variante, le constituant est utilisé sous une forme adsorbée sur un support poreux. A titre de support, on peut mentionner par exemple les terres de diatomées, l'argile, la bentonite, la silice, l'alumine. L'adsorption est effectuée de manière connue en soi. Ainsi, d'une façon classique le constituant à base de phosphore, en solution ou en suspension, est mis en contact avec le support, sous agitation, puis la suspension résultante est chauffée de façon à faire évaporer le liquide en excès. Cette opération peut de même être réalisée par imprégnation du support dans un tambour ou sur disque tournant.

Le second élément de la phase liante est au moins un constituant à base de magnésium.

Tout composé à base de magnésium convient à la présente invention dans la mesure où il réagit avec le premier constituant, en présence d'eau.

A titre d'exemple, on peut citer comme convenant à la mise en oeuvre de l'invention, les constituants suivants : l'oxyde de magnésium, l'hydroxyde de magnésium, le carbonate de magnésium.

De préférence, on utilise un constituant à base d'oxyde de magnésium. Convient notamment la magnésie dite "dead burned" habituellement obtenue après calcination de carbonate de magnésium, à des températures supérieures à 1200 °C.

D'une façon avantageuse, ledit oxyde de magnésium peut être mis en oeuvre sous une forme pure ou peut éventuellement comprendre au moins un élément du type calcium, silicium, aluminium ou encore fer ; ces éléments se trouvant en général sous forme d'oxyde ou d'hydroxyde. A titre d'exemple de ce type de composé, on peut citer la dolomie, mélange comprenant notamment de l'oxyde de magnésium et de l'oxyde de calcium.

Si l'oxyde de magnésium est utilisé sous forme pure, la pureté dudit oxyde, est d'au moins 80 %.

On utilise de préférence un constituant à base de magnésium dont la surface spécifique est inférieure à 2 m²/g. Plus particulièrement, la surface spécifique est inférieure à 1 m²/g.

Par ailleurs, la granulométrie dudit constituant est habituellement comprise entre 10 et 500 µm. Il serait envisageable d'utiliser des composés dont la granulométrie se trouve en dehors de la gamme précitée, mais sans que cela n'apporte d'avantages particuliers. Ainsi, si la granulométrie est supérieure à 500 µm, une étape de broyage préalable à l'incorporation dans la composition peut être nécessaire. Par ailleurs, si la granulométrie desdits constituants était inférieure à 10 µm, on pourrait constater une modification des propriétés de la composition mise en contact avec l'eau. On peut notamment constater un accroissement de la vitesse de prise du ciment, sauf à augmenter la teneur en agent retardant la prise, dont il sera question dans la suite de la description. De ce fait, le ciment obtenu selon le procédé de l'invention pourrait être moins intéressant sur le plan de la mise en oeuvre ou sur le plan économique.

Il est à noter que les deux constituants décrits auparavant, s'ils se présentent sous forme solide, peuvent éventuellement faire l'objet d'une étape de broyage avant leur utilisation dans le procédé selon l'invention.

La proportion du constituant à base de magnésium (exprimée en poids de MgO) rapportée à celle du constituant à base de phosphore (exprimée en poids de P₂O₅) est plus particulièrement comprise entre 1 et 3.

La caractéristique essentielle du ciment selon l'invention est que sa phase liante comprend, en plus des composés du phosphore et du magnésium, au moins un composé minéral présentant des conditions particulières sur la forme des objets qui le constituent et la taille de ces objets.

Selon un premier mode de réalisation de l'invention, la phase liante est à base de composés du phosphore et du magnésium et d'au moins un composé minéral, ce dernier étant introduit dans le ciment sous forme de particules (1) de taille inférieure à 0,1 µm. On entend par particules (1) des objets indivisibles, se présentant sous une forme unitaire, unifiée.

Selon un deuxième mode de réalisation de l'invention, la phase liante est à base des composés du phosphore et du magnésium et d'au moins un composé minéral, ce dernier étant introduit dans le ciment sous forme d'agrégats (2). On entend par agrégats (2), des objets formés de l'empilement de plusieurs objets plus petits, qui sont eux sous une forme unitaire, unifiée, tels que les particules définies précédemment. Les agrégats introduits présentent une taille inférieure à 0,1 µm. Ces agrégats sont en général très difficilement divisibles, et en particulier indivisibles dans un mélange des composés du magnésium et du phosphore et d'eau.

Selon un troisième mode de réalisation de l'invention, la phase liante est à base des composés du phosphore et du magnésium et d'au moins un composé minéral, ce dernier étant introduit sous forme d'agglomérats (3). On entend par agglomérats (3), des objets formés de l'empilement de plusieurs objets plus petits : des particules et/ou des agrégats. Selon l'invention, lors de leur mélange avec les composés du magnésium et du phosphore et l'eau, les agglomérats introduits doivent pouvoir au moins en partie se désagglomérer en les objets qui les constituent (particules ou agrégats), afin de conduire dans le mélange à des objets de taille inférieure à 0,1 µm.

L'invention consiste à avoir remarqué que, dans le ciment issu du mélange de la phase liante (composé du phosphore + composé du magnésium + composé minéral) et de l'eau, le composé minéral de la phase liante doit se présenter sous forme d'objets de taille inférieure à 0,1 µm, lesdits objets (particules, agrégats) ayant été introduits tels quels ou sous forme agglomérée. Leur mélange avec les composés du phosphore et du magnésium, et l'eau doit conduire dans ce dernier cas à leur désagglomération.

Le composé minéral peut être introduit comme un mélange de ces trois formes (particules, agrégats, agglomérats).

Dans le texte, on entend par taille, la taille moyenne des particules, agrégats ou agglomérats. Cette taille est mesurée par microscopie électronique par transmission (MET).

De préférence, le composé minéral est introduit sous forme d'agglomérats présentant une taille d'au plus 60 µm, avantageusement d'au plus 20 µm. Une telle taille des agglomérats permet une manipulation plus aisée du composé minéral.

Le composé minéral peut être choisi parmi SiO₂, TiO₂, Al₂O₃, ZrO₂, Cr₂O₃, CaCO₃, le talc, le mica, le kaolin, la wollastonite, la bentonite, le métakaolin. Ce peut être des composés cristallisés ou amorphes obtenus par exemple par broyage.

Il s'agit notamment de la silice et, en particulier, de silice de précipitation.

La silice introduite peut avantageusement se présenter sous la forme d'agglomérats de taille moyenne inférieure à 50 µm, lesdits agglomérats étant constitués d'agrégats de taille moyenne inférieure à 0,1 µm.

Il peut s'agir par exemple de la silice précipitée T38AB commercialisée par Rhône-Poulenc se présentant sous forme d'agglomérats de taille inférieure à 50 µm. Ces agglomérats se divisent dans le mélange de phase liante et d'eau sous forme d'agrégats de taille inférieure à 0,1 µm. Ces agrégats, qui sont eux-mêmes formés de particules élémentaires de taille 15 nm, sont indivisibles dans le mélange phase liante/eau.

On peut utiliser également de la fumée de silice broyée ou de la silice pyrogénée.

La teneur en composé minéral de la phase liante du ciment selon l'invention est comprise, en général, entre 1 et 15 parties en poids pour 100 parties de la phase liante, de préférence entre 1 et 10 parties.

La phase liante du ciment selon l'invention peut comprendre en outre un agent retardant la prise.

Plus particulièrement, cet agent est choisi parmi des composés susceptibles de complexer le magnésium.

Ces derniers peuvent être notamment des acides carboxyliques, tels que les acides citrique, oxalique, tartrique, des acides, esters ou sels contenant du bore, des acides, esters ou sels contenant du phosphore, comme le tripolyphosphate de sodium, le sulfate ferreux, le sulfate et lignosulfonate de sodium, le chlorure de zinc, l'acétate de cuivre, le gluconate de sodium, le sulfate acétate de sodium cellulose, le produit de la réaction du formaldéhyde avec l'aminolignosulfate, le dialdéhyde amidon, la N,N-diméthyloldihydroxyéthylène urée, les silicofluorures, le tall oil et le sucrose, ces composés étant pris seuls ou en mélange.

De préférence, on utilise, seuls ou en mélange, les acides carboxyliques, et de préférence, les acides, esters ou sels contenant du bore.

Ainsi, dans cette dernière catégorie de composés, on peut mentionner, sans intention de se limiter, l'acide borique et ses sels, tels que les sels de métaux alcalins, comme le sodium (borax), les sels d'amine ou d'ammonium. Les esters de l'acide borique conviennent aussi à la mise en oeuvre de l'invention, comme les trialkyloxyborates, les triaryloxyborates.

Selon un mode particulier, l'additif est mis en oeuvre sous la forme d'une poudre dont le diamètre moyen est de 10 à 200 µm.

La quantité d'agent retardant la prise est d'au plus 10 parties en poids pour 100 parties en poids des trois constituants précités (composés du phosphore et du magnésium et composé minéral). De préférence, cette quantité est d'au plus 5 parties en poids rapporté à la même référence.

Les ciments obtenus par le mélange selon l'invention peuvent en outre comprendre des granulats, en tant qu'éléments constitutifs.

A titre d'exemples de tels composés, on peut mentionner le sable, la silice, l'alumine, l'oxyde de zirconium, la dolomie brute, le minerai de chrome, le calcaire, le clinker, la vermiculite, la perlite, le mica, le gypse, la cellulose.

On peut de même utiliser les cendres volantes ou la fumée de silice condensée.

Les cendres volantes pouvant être utilisées sont, en général, des cendres silicoalumineuses issues notamment de la combustion dans les centrales thermiques.

La granulométrie de ces cendres est habituellement comprise entre 0,5 et 200 µm.

La fumée de silice condensée présente, en général, une surface spécifique comprise entre 20 et 30 m²/g.

Selon l'application ultérieure du ciment, les granulats entrant dans la composition seront choisis :
- soit parmi le sable, la silice ou les autres composés cités dans la liste ci-dessus,
- soit parmi les cendres volantes ou la fumée de silice condensée,
- soit parmi un mélange de ces deux types de granulats.

Habituellement, la quantité de granulats dans le ciment selon l'invention est d'au plus 1000 parties en poids pour 100 parties en poids de phase liante.

Selon un mode de réalisation particulier, la quantité de sable, silice ou des autres composés cités dans la liste ci-dessus, est d'au plus 900 parties en poids rapporté à la même référence que précédemment.

De même, la quantité de fumée de silice condensée ou de cendres volantes est de préférence d'au plus 100 parties en poids pour 100 parties en poids de phase liante.

Le ciment selon l'invention peut comprendre par ailleurs un agent hydrofugeant.

Enfin, le ciment selon l'invention peut comprendre tous les additifs classiques, comme les fluidifiants, tels que le lignosulfonate de sodium et les condensés de naphtalène sulfonate, le naphtalène, le tripolyphosphate, l'hexamétaphosphate de sodium, rhydrogénophosphate d'ammonium, la mélanine, les alkyles siliconates, l'aminopropyltriéthoxysilane.

Des agents antimousse peuvent de même être des éléments constitutifs du ciment selon l'invention. A titre d'exemple, on peut citer en particulier les antimousses à base de polydiméthyl-siloxanes.

Parmi ce type d'agents, on peut citer également les silicones sous la forme d'une solution, d'un solide, et de préférence sous la forme d'une résine, d'une huile ou d'une émulsion, de préférence, dans l'eau. Conviennent tout particulièrement les silicones comprenant essentiellement des motifs M (RSiO_{0,5} ) et D (R₂SiO). Dans ces formules, les radicaux R, identiques ou différents, sont plus particulièrement choisis parmi l'hydrogène et les radicaux alkyles comprenant 1 à 8 atomes de carbone, le radical méthyle étant préféré. Le nombre de motifs est de préférence compris entre 30 et 120.

Enfin, on peut ajouter des agents de texture et de rhéologie : fibres de cellulose, guar, amidon,...

D'une façon générale, la quantité de ces additifs dans le ciment est d'au plus 10 parties en poids pour 100 parties en poids de phase liante. De préférence, la quantité d'additifs est d'au plus 5 parties en poids.

La quantité d'eau à introduire pour la préparation du ciment selon l'invention est telle que l'on obtienne une pâte plastique, homogène et maléable. Elle dépend de l'application ultérieure du ciment. En effet, si l'on désire faire des revêtements internes de tuyauterie, la composition est en général plus cohésive qu'un ciment destiné à constituer un revêtement de sol, ou pour la préparation de dalles ou de panneaux.

En général, la teneur en eau est d'au plus 50 % en poids, de préférence comprise entre 35 et 40 %, par rapport au poids de phase liante.

Les ciments selon l'invention ont l'avantage de ne présenter aucun phénomène de démixion.

Le mélange de la phase liante et de l'eau peut être effectué selon toute méthode appropriée. Ainsi, on peut procéder en apportant tous les éléments constitutifs du ciment et l'eau, simultanément ou séparément. Selon cette dernière possibilité, on prépare en général une composition comprenant la phase liante, les granulats, le cas échéant l'agent retardant et tout ou partie des additifs éventuels en général solides, précédemment cités. On mélange ensuite ladite composition avec de l'eau, celle-ci comprenant, si tel est le cas, les éléments non introduits dans l'étape antérieure de préparation de la composition, comme les additifs liquides notamment.

Il est à noter que l'on peut aussi envisager de mettre en oeuvre des mélanges plus ou moins complets des éléments constitutifs du ciment.

L'essentiel du procédé est qu'il soit mis en oeuvre de façon à obtenir une répartition de tous les éléments constitutifs la plus homogène possible dans la masse du ciment.

Le mélange des éléments constitutifs se fait par tout moyen connu et de préférence dans des conditions cisaillantes, en utilisant par exemple un malaxeur.

L'opération de mélange est avantageusement effectuée à une température voisine de la température ambiante.

Les ciments selon l'invention peuvent être utilisés en tant que coulis ou mortiers selon les proportions d'eau et d'agrégats utilisées et la nature de ces agrégats.

Il est possible de les utiliser en tant que mortiers de réparation et de scellement, par exemple dans la réfection rapide de routes, ponts, et pistes d'aéroport. Ainsi, ils sont utilisés pour obturer des craquelures, des trous ou recouvrir des zones dégradées ainsi que pour la réparation d'ouvrages en béton armé. En effet, les mortiers ou coulis, outre une bonne adhérence aux ciments dits de Portland, présentent des propriétés mécaniques de résistance à la flexion et à la compression importantes, les rendant particulièrement appropriés pour ce type d'applications.

Ils peuvent de même être employés en tant que revêtements de sols, de tuyauteries, résistants aux attaques chimiques, présentant une excellente dureté et tenue à l'abrasion.

On peut également les utiliser pour la réalisation de panneaux en général et en particulier de panneaux de parement intérieurs ou extérieurs. Pour cela, la composition obtenue est coulée dans un moule approprié, pour donner des dalles ou des panneaux. Elle peut également être projetée. Les produits moulés ou projetés sont ensuite mis à sécher, d'une façon avantageuse à une température voisine de la température ambiante.

Enfin, il est possible de préparer à partir de ces ciments des composés réfractaires devant résister à de hautes températures tels que des mortiers de scellement pour conduits de cheminées ou des panneaux anti-feu.

La présente invention concerne enfin un matériau composite à base du ciment précédemment décrit et de fibres.

A titre d'exemple de fibres convenables pour l'obtention dudit matériau, on peut citer les fibres en polypropylène, en polyester, en polyaramide, comme par exemple le KEVLAR®, les fibres de carbone, le polyamide, l'alcool polyvinylique ou les rubans de fontes amorphes.

Des fibres de verre peuvent de même être utilisées pour l'obtention du matériau composite selon l'invention. Toutes les fibres de verre employées habituellement dans les ciments conviennent. On peut donc employer des fibres alcali-résistantes, comme les fibres de verres spéciaux obtenus notamment par traitement avec du zirconium, de même que les fibres de verres sodo-calciques. Cependant, d'une façon avantageuse, les fibres de verre standards conviennent aussi à l'obtention de matériaux composites selon l'invention. C'est le cas des verres classiques comme les verres borosilicatés qui sont habituellement détruits en milieu alcalin.

Les fibres ont des longueurs variant de 5 mm à plusieurs centaines de millimètres.

La quantité de fibres dans le matériau composite selon l'invention est comprise entre 1 et 10 % par rapport au poids de phase liante.

Les matériaux composites selon l'invention sont obtenus par mélange du ciment tel que décrit précédemment, avec les fibres. Le mélange se fait dans les mêmes conditions de préparation du ciment et ne seront donc pas reprises ici. La composition ainsi obtenue est coulée dans un moule approprié, pour donner des dalles ou des panneaux. Les produits moulés sont ensuite mis à sécher, d'une façon avantageuse à une température voisine de la température ambiante.

Les matériaux composites selon l'invention peuvent être utilisés notamment pour donner des panneaux de façade. L'avantage de ces matériaux réside dans leur vitesse de fabrication, et principalement dans leur vitesse de séchage.

Les exemples suivants illustrent l'invention sans toutefois en limiter la portée.

### EXEMPLES

### Méthodes de contrôle des propriétés du ciment

### Mesure de l'ouvrabilité

L'ouvrabilité est mesurée à l'aide d'une table à secousse sur mortier normalisé (NFP 15403). Le mortier est introduit dans un moule tronconique puis démoulé et secoué à l'aide de la table à secousse. L'ouvrabilité est le rapport du diamètre du moule tronconnique sur celui du mortier après effondrement. Il est exprimé en pourcentage.

### Mesure du temps de prise

Le temps de prise est mesuré à l'aide d'un appareil type Vicat automatique selon la norme NFP 15431.

### Mesure des propriétés mécaniques

On réalise des éprouvettes prismatiques (4X4X16 cm³) en coulant le mortier ou le coulis dans des moules standards en acier doux. Ces éprouvettes sont démoulées 1 heure après le temps de prise et séchées à température ambiante. Les propriétés mécaniques sont testées sur ces éprouvettes.

Les essais sont réalisés en flexion en trois points (NFP 18407) sur six demi-éprouvettes et en compression (NFP 15451) sur six demi-éprouvettes à l'aide d'une machine d'essai hydraulique (200 kN).

### Mesure de la ductilité

La ductilité est estimée à partir des enregistrements force/déplacement obtenus pour les essais de flexion.

### Mesure de l'adhésion

Un revêtement de 1 cm est réalisé à partir du mortier ou le coulis à tester sur une dalle en béton. Un jour plus tard, on effectue ensuite un carottage du revêtement sec, et on colle un plot métallique dans le trou laissé par le carottage. Le plot est ensuite arraché à l'aide d'un arrachemètre : la force appliquée pour une surface de 20 à 25 cm² détermine la valeur de l'adhésion.

### Exemple comparatif 1 : mortier phosphomagnésien standard

On prépare un mortier phosphomagnésien à partir des constituants suivants :
- 25 % en poids de phase liante constituée de :
   . 48,5 % en poids de phosphate monoammonique,
   . 48,5 % en poids d'oxyde de magnésium,
   . 3 % en poids d'acide borique qui est un agent retardant,
- 75 % en poids de sable normalisé CEN 31 196-1 dont les particules élémentaires ont une taille comprise entre 100 et 500 µm.

On prépare différents mortiers à différentes teneurs en eau par mélange des matériaux définis ci-dessus avec de l'eau. Le mélange est réalisé de la manière suivante : on malaxe à l'aide d'un malaxeur type HOBART les matériaux à l'état sec pendant 30 s à petite vitesse (60 tr/min), puis on ajoute l'eau dans la proportion souhaitée. Ensuite, on continue à malaxer pendant 1 min 30 à petite vitesse puis 1 min 30 à grande vitesse (120 tr/min).

On mesure l'ouvrabilité, la densité, le temps de prise de ces mortiers ainsi que les propriétés mécaniques obtenues. Les résultats sont rassemblés dans les tableaux 1 et 2.

**Tableau 1**

| Rapport en poids eau/phase liante | Ouvrabilité (%) | Densité du mortier frais | Temps de prise (min) |
|---|---|---|---|
| 0,32 | 7,5 | 1,98 | 32 |
| 0,36 | 30 | 1,95 | 33 |
| 0,4 | 45 | 1,93 | 39 |
| 0,43 | 55 | 1,92 | 41 |

**Tableau 2**

| Moment de la mesure | Résistance à la compression (MPa) | Résistance à la flexion (MPa) |
|---|---|---|
| 1 jour | 35 | 6,4 |
| 7 jours | 42,5 | 6,9 |
| 28 jours | 44 | 7,8 |

On observe un effet de ressuage lors de la prise : de l'eau remonte à la surface du mortier tandis que les granulats ont tendance à floculer.

L'adhérence sur dalle de béton propre au bout de 7 jours est inférieure à 5 kg/cm².

### Exemple 2 : mortier phosphomagnésien comprenant une silice de précipitation.

On prépare des mortiers phosphomagnésiens comme dans l'exemple 1 si ce n'est que la phase liante comprend en outre de la silice dans une teneur de 5 % en poids par rapport au poids total de la phase liante. La silice introduite est une silice de précipitation T38AB commercialisée par Rhône-Poulenc présentant les caractéristiques suivantes :
- taille des agglomérats : 50 µm
- taille des agrégats : inférieure à 0,1 µm (mesurées par MET).

Lorsque cette silice est simplement malaxée avec de l'eau, elle se désagglomère sous la forme de ses agrégats de taille inférieure à 0,1 µm.

Les conditions de malaxage de cette silice avec l'eau et les autres constituants du ciment pour former un mortier, telles que définies dans l'exemple 1, sont plus cisaillantes qu'un simple malaxage de la silice dans l'eau. Par conséquent, cette silice se désagglomère également dans le mortier phosphomagnésien et se présente dans ce dernier sous forme de ses agrégats de taille inférieure à 0,1 µm.

On mesure l'ouvrabilité, la densité, le temps de prise ainsi que les propriétés mécaniques de ces mortiers pour différents rapports eau/phase liante. Les résultats sont rassemblés dans les tableaux 3 et 4.

**Tableau 3**

| Rapport en poids eau/phase liante | Ouvrabilité (%) | Densité du mortier frais | Temps de prise (min) |
|---|---|---|---|
| 0,32 | 2,5 | 2,01 | 30 |
| 0,36 | 25 | 1,96 | 30 |
| 0,4 | 35 | 1,96 | 35 |
| 0,43 | 45 | 1,93 | 40 |

**Tableau 4**

| Moment de la mesure | Résistance à la compression (MPa) | Résistance à la flexion (MPa) |
|---|---|---|
| 1 jour | 35,6 | 7,1 |
| 7 jours | 49 | 8,05 |
| 28 jours | 52,5 | 9,5 |

On constate que les propriétés mécaniques sont améliorées.

On n'observe aucun effet de ressuage. On n'observe aucun départ d'eau même lors du dépôt du mortier sur un support poreux, tel qu'une plaque de béton, ou en soumettant le mortier à un tirage sous vide sur bûchner.

L'adhérence sur dalle de béton propre au bout de 7 jours est de 15 kg/cm². Elle est fortement améliorée : l'eau du mortier n'a pas été absorbée par le support en béton.

### Exemple comparatif 3 : coulis phosphomagnésien standard

On prépare un coulis phosphomagnésien à partir des constituants suivants :
- 50 % en poids de phase liante constituée de :
   . 48,5 % en poids de phosphate monoammonique
   . 48,5 % en poids d'oxyde de magnésium
   . 3 % en poids d'acide borique qui est un agent retardant
- 50 % en poids de cendres volantes silico-alumineuses de taille moyenne 12 µm.

On prépare un coulis par mélange des matériaux définis ci-dessus avec de l'eau dans un rapport en poids eau /phase liante de 0,4. Le mélange est réalisé de la manière suivante : on malaxe les matériaux à l'état sec pendant 30 s à petite vitesse (60 tr/min), puis on ajoute l'eau dans la proportion souhaitée. Ensuite, on continue à malaxer pendant 1 min 30 à petite vitesse puis 1 min 30 à grande vitesse (120 tr/min).

On mesure les propriétés mécaniques obtenues pour le coulis. Les résultats sont rassemblés dans le tableau 5.

**Tableau 5**

| Moment de la mesure | Résistance à la compression (MPa) | Résistance à la flexion (MPa) |
|---|---|---|
| 1 jour | 10,9 | 4,8 |
| 28 jours | 15 | 5 |

On observe un effet de ressuage lors de la prise : de l'eau remonte à la surface du coulis tandis que les granulats ont tendance à floculer.

### Exemple 4 : coulis phosphomagnésien avec silice de précipitation.

On prépare un coulis phosphomagnésien comme dans l'exemple 3 si ce n'est que le phase liante comprend en outre de la silice de précipitation T38AB commercialisée par Rhône-Poulenc (comme dans l'exemple 2) dans une teneur de 8 % en poids par rapport au poids total de la phase liante.

On mesure les propriétés mécaniques obtenues pour le coulis. Les résultats sont rassemblés dans le tableaux 6.

**Tableau 6**

| Moment de la mesure | Résistance à la compression (MPa) | Résistance à la flexion (MPa) |
|---|---|---|
| 1 jour | 10,6 | 4,6 |
| 28 jours | 17,5 | 6,2 |

Il y a amélioration des propriétés mécaniques à long terme.

On n'observe aucun effet de ressuage lors de la prise.

L'adhérence du coulis sur substrat propre est de 13,5 kg/cm² au bout de 7 jours à sec, et de 10 kg/cm² au bout de 7 jours à sec et 7 jours dans l'eau.

### Exemple comparatif 5 : composite "phosphomagnésien" standard

On prépare un composite phosphomagnésien à partir des constituants suivants :
- 49 % en poids de phase liante constituée de :
   . 48,5 % en poids de phosphate monoammonique,
   . 48,5 % en poids d'oxyde de magnésium,
   . 3 % en poids d'acide borique qui est un agent retardant,
- 49 % en poids de sables fin (1/3 de sable de taille 200 µm (F15), 1/3 de sable de taille 315 µm (F25), 1/3 de sable de taille 600 µm (F35))
- 2 % en poids de fibres de polypropylène.

On prépare les composites par mélange des matériaux définis ci-dessus avec de l'eau. Le mélange est réalisé de la manière suivante : on malaxe les matériaux à l'état sec pendant 30 s à petite vitesse (60 tr/min), puis on ajoute l'eau dans un rapport en poids eau / phase liante de 0,2. Ensuite, on continue à malaxer pendant 1 min 30 à petite vitesse puis 1 min 30 à grande vitesse (120 tr/min). Les fibres sont ensuite incorporées dans le mélange à petite vitesse.

On mesure les propriétés mécaniques et la ductilité obtenues pour le composite. Les résultats sont rassemblés dans le tableau 7.

**Tableau 7**

| | Résistance à la flexion à 18 jours (mPa) | Ductilité |
|---|---|---|
| Composite à base de fibre polypropylène | 7,5 | bonne |

On observe un effet de ressuage lors de la prise : de l'eau remonte à la surface du composite tandis que les granulats ont tendance à floculer.

### Exemple 6 : composite "phosphomagnésien" avec silice de précipitation

On prépare un composite phosphomagnésien comme dans l'exemple 5 si ce n'est que la phase liante comprend en outre 5 % de silice de précipitation T38AB par rapport au poids total de la phase liante.

On mesure les propriétés mécaniques et la ductilité obtenues pour le composite. Les résultats sont rassemblés dans le tableau 8.

**Tableau 8**

| | Résistance à la flexion à 18 jours (mPa) | Ductilité |
|---|---|---|
| Composite à base de fibre polypropylène | 8 | importante |

On n'observe aucun effet de ressuage lors de la prise.

### Exemple comparatif 7 : mortier phosphomagnésien avec silice non désagglomérable

On prépare un mortier phosphomagnésien présentant la même composition que dans l'exemple 2, si ce n'est que la silice T38AB, utilisée en tant que composé minéral de la phase liante, est remplacée par la silice de précipitation Zeosil Z160 commercialisée par Rhône-Poulenc se présentant sous la forme d'agglomérats de taille moyenne 200 µm.

Ces agglomérats de silice ne se désagglomèrent pas lorsqu'ils sont simplement malaxés avec de l'eau.

On observe que le mortier préparé à partir de cette phase liante conduit à un phénomène de démixion et de ressuage.

### Exemple comparatif 8 : mortier phosphomagnésien avec farine de quartz de taille supérieure à 0,1 µm

On prépare un mortier phosphomagnésien présentant la même composition que dans l'exemple 2, si ce n'est que la silice T38AB, utilisée en tant que composé minéral de la phase liante, est remplacée par de la farine de quartz (sable broyé très finement) se présentant sous la forme de particules de taille moyenne supérieure à 0,1 µm.

On observe que le mortier préparé à partir de cette phase liante conduit à un phénomène de démixion et de ressuage.

### Exemple comparatif 9 : mortier phosphomagnésien avec fumée de silice de taille supérieure à 0,5 µm

On prépare un mortier phosphomagnésien présentant la même composition que dans l'exemple 2, si ce n'est que la silice T38AB, utilisée en tant que composé minéral de la phase liante, est remplacée par de la fumée de silice se présentant sous la forme de particules de taille moyenne supérieure à 0,5 µm.

On observe que le mortier préparé à partir de cette phase liante conduit à un phénomène de démixion et de ressuage.

## Revendications

1. Ciment phosphomagnésien obtenu par mélange d'eau et d'une phase liante à base d'au moins un composé du phosphore, d'au moins un composé du magnésium et d'au moins un composé minéral, caractérisé en ce que le composé minéral est introduit sous forme :
- soit de particules (1) de taille inférieure à 0,1 µm,
- soit d'agrégats (2) de taille inférieure à 0,1 µm,
- soit d'agglomérats (3) susceptibles de se désagglomérer au moins en partie, lors du mélange de ladite phase liante et de l'eau, en particules de taille inférieure à 0,1 µm ou en agrégats de taille inférieure à 0,1 µm.

2. Ciment phosphomagnésien selon la revendication 1, caractérisé en ce que le composé minéral est introduit sous forme d'agglomérats présentant une taille d'au plus 60 µm.

3. Ciment phosphomagnésien selon la revendication 1 ou 2, caractérisé en ce que le composé minéral est la silice.

4. Ciment phosphomagnésien selon la revendication 3, caractérisé en ce que la silice est introduite sous la forme d'agglomérats de taille inférieure à 50 µm, lesdits agglomérats étant constitués d'agrégats de taille inférieure à 0,1 µm.

5. Ciment phosphomagnésien selon l'une des revendications 1 ou 2, caractérisé en ce que le composé minéral est choisi parmi TiO₂, Al₂O₃, ZrO₂, Cr₂O₃, CaCO₃, le talc, le mica, le kaolin, la wollastonite, la bentonite, le métakaolin.

6. Ciment phosphomagnésien selon l'une quelconque des revendications précédentes, caractérisé en ce que la phase liante comprend 1 à 15 parties en poids du composé minéral pour 100 parties de phase liante.

7. Ciment phosphomagnésien selon l'une des revendications précédentes, caractérisé en ce qu'il comprend des granulats.

8. Ciment phosphomagnésien selon l'une quelconque des revendications précédentes, caractérisé en ce que la quantité de granulats est d'au plus 1000 parties en poids pour 100 parties de phase liante.

9. Ciment phosphomagnésien selon l'une quelconque des revendications précédentes, caractérisé en ce que la teneur en eau est d'au plus 50 % en poids, rapporté au poids de phase liante.

10. Utilisation du ciment phosphomagnésien selon l'une quelconque des revendications 1 à 9 en tant que coulis ou de mortier.

11. Utilisation du ciment phosphomagnésien selon l'une quelconque des revendications 1 à 9 pour le revêtement de sols, pour la préparation de mortiers de réparation et de scellement, pour la réalisation de panneaux de parement, pour la réparation d'ouvrages en béton armé, pour la préparation de composés réfractaires.

12. Matériau composite à base de ciment phosphomagnésien selon l'une quelconque des revendications 1 à 9 et de fibres.

13. Matériau composite selon la revendication 12 caractérisé en ce que la teneur en fibres est comprise entre 1 et 10 % en poids par rapport au poids de la phase liante du ciment phosphomagnésien.

## Patentansprüche

1. Phosphor-Magnesium-Zement, erhalten durch Mischen von Wasser und einer Bindemittelphase auf Basis von mindestens einer Phosphorverbindung, mindestens einer Magnesiumverbindung und mindestens einer mineralischen Verbindung, dadurch gekennzeichnet, daß die mineralische Verbindung zugesetzt wird in Form:
- entweder von Teilchen (1) mit einer Größe unter 0,1 µm,
- oder von Aggregaten (2) mit einer Größe unter 0,1 µm,
- oder von Agglomeraten (3), die in der Lage sind, sich zumindest zum Teil während des Mischens der Bindemittelphase und des Wassers zu Teilchen mit einer Größe unter 0,1 µm oder zu Aggregaten mit einer Größe unter 0,1 um zu desagglomerieren.

2. Phosphor-Magnesium-Zement nach Anspruch 1, dadurch gekennzeichnet, daß die mineralische Verbindung in Form von Agglomeraten, die eine Größe von höchstens 60 um aufweisen, zugesetzt wird.

3. Phosphor-Magnesium-Zement nach Anspruch 1 oder 2, dadurch gekennzeichnet, daß die mineralische Verbindung Siliciumdioxid ist.

4. Phosphor-Magnesium-Zement nach Anspruch 3, dadurch gekennzeichnet, daß das Siliciumdioxid in Form von Agglomeraten mit einer Größe unter 50 µm zugesetzt wird, wobei die Agglomerate aus Aggregaten mit einer Größe unter 0,1 µm gebildet werden.

5. Phosphor-Magnesium-Zement nach einem der Ansprüche 1 oder 2, dadurch gekennzeichnet, daß die mineralische Verbindung ausgewählt wird unter TiO₂, Al₂O₃, ZrO₂, Cr₂O₃, CaCO₃, Talk, Glimmer, Kaolin, Wollastonit, Bentonit, Metakaolin.

6. Phosphor-Magnesium-Zement nach einem der vorangegangenen Ansprüche, dadurch gekennzeichnet, daß die Bindemittelphase 1 bis 15 Gewichtsteile mineralische Verbindung pro 100 Teile Bindemittelphase enthält.

7. Phosphor-Magnesium-Zement nach einem der vorangegangenen Ansprüche, dadurch gekennzeichnet, daß er Zuschlag enthält.

8. Phosphor-Magnesium-Zement nach einem der vorangegangenen Ansprüche, dadurch gekennzeichnet, daß die Menge an Zuschlag höchstens 1000 Gewichtsteile pro 100 Teile Bindemittelphase beträgt.

9. Phosphor-Magnesium-Zement nach einem der vorangegangenen Ansprüche, dadurch gekennzeichnet, daß der Gehalt an Wasser höchstens 50 Gew.-%, bezogen auf das Gewicht der Bindemittelphase, beträgt.

10. Verwendung des Phosphor-Magnesium-Zements nach einem der Ansprüche 1 bis 9 als Vergußmasse oder Mörtel.

11. Verwendung des Phosphor-Magnesium-Zements nach einem der Ansprüche 1 bis 9 zum Überziehen von Fußböden, für die Herstellung von Mörteln für die Reparatur und zum Einmauern, für die Erzeugung von Verkleidungsplatten, für die Reparatur von Erzeugnissen aus Stahlbeton, für die Herstellung von bei hohen Temperaturen feuerfesten Zusammensetzungen.

12. Verbundwerkstoff, basierend auf einem Phosphor-Magnesium-Zement nach einem der Ansprüche 1 und 9 und Fasern.

13. Verbundwerkstoff nach Anspruch 12, dadurch gekennzeichnet, daß der Gehalt an Fasern zwischen 1 und 10 Gew.-% bezogen auf das Gewicht der Bindemittelphase des Phosphor-Magnesium-Zements liegt.

## Claims

1. A phosphomagnesium cement obtained by mixing water and a binding phase based on at least one phosphorus compound, at least one magnesium compound and at least one mineral compound, characterised in that the mineral compound is introduced in the form of:
- particles (1) of a size of less than 0.1 µm,
- aggregates (2) of a size of less than 0.1 µm, or
- agglomerates (3) which are capable of at least partially disagglomerating, upon mixing of said binding phase and the water, to form particles of a size of less than 0.1 µm or aggregates of a size of less than 0.1 µm.

2. A phosphomagnesium cement according to claim 1 characterised in that the mineral compound is introduced in the form of agglomerates of a size of at most 60 µm.

3. A phosphomagnesium cement according to claim 1 or claim 2 characterised in that the mineral compound is silica.

4. A phosphomagnesium cement according to claim 3 characterised in that the silica is introduced in the form of agglomerates of a size of less than 50 µm, said agglomerates being formed by aggregates of a size of less than 0.1 µm.

5. A phosphomagnesium cement according to one of claims 1 and 2 characterised in that the mineral compound is selected from TiO₂, Al₂O₃, ZrO₂, Cr₂O₃, CaCO₃, talc, mica, kaolin, wollastonite, bentonite, and metakaolin.

6. A phosphomagnesium cement according to any one of the preceding claims characterised in that the binding phase comprises 1 to 15 parts by weight of the mineral compound for 100 parts of binding phase.

7. A phosphomagnesium cement according to one of the preceding claims characterised in that it comprises granulates.

8. A phosphomagnesium cement according to any one of the preceding claims characterised in that the amount of granulates is at most 1000 parts by weight for 100 parts of binding phase.

9. A phosphomagnesium cement according to any one of the preceding claims characterised in that the proportion of water is at most 50% by weight with respect to the weight of binding phase.

10. Use of the phosphomagnesium cement according to any one of claims 1 to 9 as a grout or mortar.

11. Use of the phosphomagnesium cement according to any one of claims 1 to 9 for covering floors, for preparing repair and sealing mortars, for producing facing panels, for repairing reinforced concrete works and for preparing refractory compounds.

12. A composite material based on phosphomagnesium cement according to any one of claims 1 to 9 and fibres.

13. A composite material according to claim 12 characterised in that the proportion of fibres is between 1 and 10% by weight with respect to the weight of the binding phase of the phosphomagnesium cement.
